# EUROPÄISCHE PATENTSCHRIFT

(11) **EP 4 124 221 B1**
(45) Veröffentlichungstag und Bekanntmachung des Hinweises auf die Patenterteilung: **09.10.2024**
(21) Anmeldenummer: 21188234.5
(22) Anmeldetag: 28.07.2021
(51) Int. Cl.: A01B 63/22, A01B 63/11

(54) **LANDWIRTSCHAFTLICHE MASCHINE UND LANDWIRTSCHAFTLICHE MASCHINENKOMBINATION**
AGRICULTURAL MACHINE AND AGRICULTURAL MACHINE COMBINATION
MACHINE AGRICOLE ET COMBINAISON DE MACHINES AGRICOLES

(43) Veröffentlichungstag der Anmeldung: 01.02.2023
(73) Patentinhaber: Kverneland Group Soest GmbH, 59494 Soest (DE)
(72) Erfinder: Kottenstedde, Gregor, 59494 Soest (DE)
(74) Vertreter: Bittner, Thomas L.

(56) Entgegenhaltungen:
- DE-A1- 10 224 861
- DE-A1- 102005 001 412
- DE-A1- 102015 100 273
- DE-A1- 102018 208 852

## Beschreibung

Die Erfindung betrifft eine landwirtschaftliche Maschine sowie eine landwirtschaftliche Maschinenkombination.

### Hintergrund

Landwirtschaftlichen Maschinen, die an einen Schlepper oder Traktor angehängt werden, sind üblicherweise eingerichtet für die Benutzung auf dem Feld einerseits sowie den Transport auf Straßen und Wegen andererseits. Zu solchen Maschinen gehören beispielsweise Bodenbearbeitungsmaschinen und Spritzmaschinen, aber auch Sämaschinen und Mähmaschinen. Die jeweilige landwirtschaftliche Maschine ist mit Hilfe von Arbeitswerkzeugen für den entsprechenden Zweck hergerichtet.

Regelmäßig können die Arbeitswerkzeuge, die an einem Rahmen der landwirtschaftlichen Maschine angeordnet sind, zwischen einer Arbeitsstellung und einer Transportstellung verlagert werden, sei es mittels individueller Verlagerung des Arbeitswerkzeugs und / oder der Verlagerung von Teilen des Rahmens, an denen die Arbeitswerkzeuge angeordnet sind. In der Arbeitsstellung sind die Arbeitswerkzeuge positioniert, um eine dem jeweiligen Zweck der landwirtschaftlichen Maschine entsprechende Arbeit oder Bearbeitung auszuführen. In der Transportstellung sind die Arbeitswerkzeuge positioniert, wenn die landwirtschaftliche Maschine mittels des Schleppers nicht zur landwirtschaftlichen Arbeit, sondern zum Transport der landwirtschaftlichen Maschine bewegt wird, beispielsweise auf der Straße oder Feldwegen. In Verbindung mit Bodenbearbeitungswerkzeugen bedeutet dies beispielsweise, dass die Bodenbearbeitungswerkzeuge üblicherweise angehoben und hierdurch vom Boden entfernt werden, während die Bodenbearbeitungswerkzeuge in der Arbeitsstellung in Kontakt mit dem Boden treten, um die Bodenbearbeitung auszuführen. Ähnlich verhält es sich zum Beispiel mit Arbeitswerkzeugen einer Mähmaschine, die ebenso in einer Transportstellung verlagerbar sein können.

Für solche landwirtschaftlichen Maschinen ist bekannt, in der Transportstellung eine Stütz- oder Transportradvorrichtung mit einem oder mehreren Stütz- oder Transporträdern zu verwenden, die bei einer Transportfahrt auf dem Boden abrollen und so den Rahmen mit den Arbeitswerkzeugen stützen. Der Rahmen mit den Arbeitswerkzeugen der landwirtschaftlichen Maschine wird hierbei dann von der schlepperseitigen Kupplungseinrichtung, über die die landwirtschaftliche Maschine an den Schlepper koppelt, einerseits und der Stützradvorrichtung andererseits für die Transportfahrt gestützt. Es kann vorgesehen sein, bei der Feldarbeit mit der landwirtschaftlichen Maschine, wenn die Arbeitswerkzeuge in der Arbeitsstellung sind, das eine oder die mehrere Stützräder auszuheben oder einzuklappen, so dass diese nicht im Bodenkontakt sind. Demgegenüber wird das Stützrad für die Transportfahrt ausgeklappt oder ausgefahren, so dass es in Bodenkontakt tritt.

Die Abstützung des Rahmens mit den Arbeitswerkzeugen bei der Transportfahrt an der schlepperseitigen Kupplungseinrichtung einerseits und mittels des einen oder der mehreren Stütz- oder Transporträder andererseits führt bei einer Transportfahrt über unebene Böden zu unterschiedlichen Belastung der schlepperseitigen Kupplungseinrichtung durch die angekoppelte landwirtschaftliche Maschine. Dieses kann dazu führen, dass die Achslastverteilung für den Schlepper nachteilig beeinflusst wird, was die Fahrstabilität der landwirtschaftlichen Maschinenkombination mit Schlepper und hieran gekoppelter landwirtschaftlicher Maschine negativ beeinflusst.

Das Dokument EP 2 289 295 A1 offenbart eine Bestellkombination bestehend aus einem Bodenbearbeitungsgerät mit an einem Tragrahmen angeordneten Anlenkpunkten für den Anbau an einen Traktordreipunktgestänge, wobei an dem Tragrahmen Seitenrahmen, an mit Bodenbearbeitungswerkzeugen und zugeordneten Nachlaufwalzen angeordnet sind. Das Bodenbearbeitungsgerät besteht aus mehreren Geräteeinheiten, die zusammen mit den Nachlaufwalzen um horizontale Achsen schwenkbar und einklappbar am Tragrahmen ausgebildet sind. Das Gerät besteht aus zwei unmittelbar nebeneinander angeordneten Bodenbearbeitungswerkzeugen tragenden Seitenrahmen, die jeweils zusammen mit den Nachlaufwalzen in eine Transportstellung einschwenkbar angeordnet sind. Es ist vorgesehen, dass in der Mitte der Bestellkombination zwischen den den jeweiligen Seitenrahmen zugeordneten Nachlaufwalzen ein schmales Mittelwalzenelement an dem Tragrahmen angeordnet ist.

Dokument DE 10 2018 208 852 A1 betrifft ein landwirtschaftliches Gerät, das mit einem Schlepper oder ähnlichem verbunden und zur Bodenbearbeitung gezogen werden kann.

Dokument DE 10 2005 001 412 A1 betrifft einen Wagen zur Abstützung eines Erntevorsatzes bei einer Straßenfahrt, wobei der Wagen ein Gestell und mindestens ein sich vom Gestell nach unten erstreckendes Rad aufweist, das Gestell zur Abstützung des Erntevorsatzes und zur Gewichtsentlastung der Räder der selbstfahrenden Erntemaschine bei einer Straßenfahrt lösbar an dem an der Erntemaschine angebrachten Erntevorsatz befestigbar und zum Erntebetrieb auf einem Feld vom Erntevorsatz trennbar ist und das Rad durch ein federndes Element am Gestell aufgehängt ist.

Dokument FR 2 886 511 A1 offenbart eine Bodenbearbeitungsmaschine mit mindestens einem gezogenen Hubgerüst, das mittels eines mit diesem gekoppelten Bezugsorgan im Boden nach einstellbarer Tiefe arbeitet, zumindest auf dem Boden. Chassis dieses Referenz- oder Bezugsorgans mit einer Rolle ist eine Aneinanderreihung von Rädern mit Reifen aus einem flexiblen Material in der Transport- und Arbeitsstellung des Rahmens. Transport- und Tasträder des Bezugselementes sind, einzeln oder in Gruppen, jeweils unabhängig montiert.

Das Dokument EP 2 232 974 A1 offenbart ein an das Kupplungselement eines Ackerschleppers ankuppelbares landwirtschaftliches Gerät mit zumindest einer auf der dem Kupplungselement abgewandten Seite des Gerätes angeordneten und zumindest ein Laufrad aufweisenden Abstützvorrichtung, welche über ein Gestänge mit dem Rahmen des Gerätes gegenüber dem Gerät bewegbar angeordnet ist. Das Gestänge ist ein in zwei Richtungen wirksames Aushubelement zugeordnet, mit dem die Abstützvorrichtung wahlweise vom Boden abhebbar und gegen den Boden zum zumindest teilweisen Anheben und / oder Ausheben des Gerätes oder Teilen des Gerätes während des Transportes drückbar ist. Das Gestänge ist als die Abstützvorrichtung, bei deren Ausheben in Richtung des Kupplungselementes und / oder des Ackerschleppers und oberhalb des Rahmens des Gerätes verlagerbares Hubgestänge ausgebildet.

Dokument EP 3 242 543 offenbart ein landwirtschaftliches Arbeitsgerät mit Zusatzfahrwerk, welches in der Dreipunkthydraulik eines ziehenden Fahrzeuges getragen wird und mit einem zusätzlichen, mit Federkraft beaufschlagten Stützrad die Lenkfähigkeit des Fahrzeuges verbessert. Über einen Totpunktmechanismus wird das Stützrad in Arbeitsstellung des Arbeitsgerätes mit Federkraft ausgehoben.

Das Dokument DE 10 224 861 A1 beschreibt ein an den Dreipunktkraftheber eines Ackerschleppers ankuppelbares landwirtschaftliches Gerät mit zumindest einem auf der Rückseite des Gerätes angeordneten Stützrad, welches über ein Gestänge mit dem Rahmen des Gerätes in aufrechter Richtung gegenüber dem Gerät bewegbar angeordnet ist. Dem Gestänge ist ein doppeltwirkender Hydraulikzylinder zugeordnet, mit dem das Stützrad wahlweise vom Boden abhebbar und gegen den Boden zur Entlastung des Dreipunktkrafthebers und zur Reduzierung der Hinterradlast des Ackerschleppers drückbar ist. Die beiden Kammern des Hydraulikzylinders sind jeweils mit einer Leitung an eine Hydraulikanlage angeschlossen sind. In der Hydraulikleitung, welche zu der Kammer des Hydraulikzylinders, die das Stützrad gegen den Boden drückt, führt, ist ein Speicherelement und ein entsperrbares Absperrelement angeordnet.

Das Dokument EP 2 988 584 offenbart ein Bodenbearbeitungsgerät, welches mit einem Fahrgestell versehen ist, welches einen Teil des Gewichtes einer zusätzlichen Bodenbearbeitungseinrichtung trägt.

Dokument EP 1 466 516 A1 offenbart ein landwirtschaftliches Anhängegerät, welches einen Rahmen zum Anhängen an einen Schlepper unter Verwendung eines Dreipunktgestänges mit zwei unteren Anhängepunkten und einem oberen Anhängepunkt aufweist. Das Gerät hat zwei Chassis, die mit dem Rahmen verbunden sind, um ein Klappen um ein Gelenk zu ermöglichen.

An jedem Fahrgestell ist ein Arbeitsgerät montiert. Ein Radrahmen ist mit dem Hauptrahmen über ein zweites Drehgelenk verbunden, das von einem hydraulischen Aktuator gesteuert wird.

Das Dokument EP 2 422 598 A2 offenbart eine Bodenbearbeitungskombination mit zumindest einem Zugfahrzeug und einem gezogenen landwirtschaftlichen Bodenbearbeitungs- und / oder Sägerät, das wenigstens eine variabel höhenverstellbare Transportachse mit wenigstens zwei Laufrädern aufweist, die über wenigstens ein Gelenk mit einem Geräterahmen verbunden ist. Es ist eine zwischen Geräterahmen und höhenverstellbarer Transportachse angeordnete Dämpfungseinrichtung vorgesehen, wobei die Transportachse einen Schwingungstilger bildet.

Das Dokument US 10,638,653 B2 offenbart eine Lenkrollenbaugruppe, die einen Rahmen aufweist und konfiguriert ist, schwenkbar mit einer Werkzeugstange zu koppeln. Weiterhin sind ein Unterrahmen, der drehbar mit dem Rahmen verbunden ist, und ein Verbindungsgestänge vorgesehen, das konfiguriert ist, die Bewegung des Rahmens relativ zu der Werkzeugstange zu steuern. Die Lenkrollenbaugruppe umfasst eine Verriegelungsbaugruppe, die einen beweglich mit dem Rahmen gekoppelten Verriegelungshebel aufweist. Der Verriegelungshebel weist ein Verriegelungselement und ein Freigabeelement auf. Es sind eine Verriegelungsstruktur, die fest mit dem Hilfsrahmen gekoppelt ist, und ein Antriebselement vorgesehen, das fest verbunden ist mit dem Verbindungsgestänge. Das Verriegelungselement ist konfiguriert, eine Drehung des Hilfsrahmens relativ zum Rahmen zu blockieren, während das Verriegelungselement mit der Verriegelungsstruktur in Eingriff steht, und das Antriebselement ist konfiguriert, das Freigabeelement zu berühren, wenn das Verbindungsgestänge den Rahmen relativ zum Rahmen nach unten bewegt, um das Verriegelungselement anzutreiben und die Verriegelungsstruktur zu lösen.

### Zusammenfassung

Aufgabe der Erfindung ist es, eine landwirtschaftliche Maschine sowie eine landwirtschaftliche Maschinenkombination mit Schlepper und landwirtschaftlicher Maschine anzugeben, die das sichere Fahren bei einer Transportfahrt unterstützen.

Zur Lösung sind eine landwirtschaftliche Maschine zum Anhängen ein einen Schlepper sowie eine landwirtschaftliche Maschinenkombination nach den unabhängigen Ansprüchen 1 und 13 geschaffen. Ausgestaltungen sind Gegenstand von abhängigen Unteransprüchen.

Nach einem Aspekt ist eine landwirtschaftliche Maschine zum Anhängen an einen Schlepper geschaffen, die Folgendes aufweist: einen Rahmen; Arbeitswerkzeuge, die an dem Rahmen angeordnet sind und zwischen einer Arbeitsstellung und einer Transportstellung verlagerbar sind; eine Kupplungsvorrichtung, die eingerichtet ist, zum Anhängen an einer Schlepper an eine schlepperseitige Kupplungsvorrichtung zu koppeln; und eine Stützradvorrichtung, die eingerichtet ist, den Rahmen mit den Arbeitswerkzeugen bei einer Transportfahrt zu stützen, wenn die Arbeitswerkzeuge in der Transportstellung angeordnet sind. Die Stützradvorrichtung weist Folgendes auf: ein Stützrad, welches bei der Transportfahrt auf dem Boden abrollt; eine Trageinrichtung, mit der das Stützrad am Rahmen angeordnet und für die Transportfahrt in verschiedene Stellungen in Bezug auf den Rahmen verlagerbar ist, und ein Hydrauliksystem, welches mit der Trageinrichtung verbunden und eingerichtet ist, bei der Transportfahrt ein Einfedern des Stützrads mittels Verlagern aus einer ausgefahrenen in eine demgegenüber eingefederte der verschiedenen Stellungen gegen eine vom Hydrauliksystem bereitgestellte Gegenkraft zuzulassen. Eine von der Stützradvorrichtung bei der Transportfahrt bereitgestellte Stützkraft ist in der ausgefahrenen und der eingefederten Stellung im Wesentlichen gleich.

Nach einem weiteren Aspekt ist eine landwirtschaftliche Maschinenkombination mit einem Schlepper und einer landwirtschaftliche Maschine mit der vorgenannten Ausbildung geschaffen, die mit dem Schlepper verbunden ist.

Die Stütz- oder Transportradvorrichtung stützt in verschiedenen Stellungen der Trageinrichtung mit dem Stütz- oder Transportrad, welche dann unterschiedlichen Stellungen des Stützrads in Bezug auf den Rahmen entsprechen, mit gleichbleibender Kraft. Hierbei können ein oder mehrere Stütz- oder Transporträder vorgesehen sein. Wenn sich der Rahmen mit den Arbeitswerkzeugen, an dem wahlweise weitere Bauteile oder Komponenten der landwirtschaftlichen Maschine angeordnet sein können, bei der Transportfahrt allein auf die schlepperseitige Kupplungsvorrichtung einerseits und das eine oder die mehreren Stützräder andererseits stützt, bewirkt die im Wesentlichen gleiche Stützkraft, die mittels der Stützradvorrichtung in den verschiedenen Stellungen bereitgestellt ist, eine im Wesentlichen gleichbleibende Belastung der schlepperseitigen Kupplungsvorrichtung aufgrund des Abstützens der landwirtschaftlichen Maschine hierauf, wodurch die angekuppelte landwirtschaftliche Maschine bei der Transportfahrt die Achslastverteilung für den Schlepper oder Traktor nicht nachteilig beeinflusst, insbesondere auch nicht bei der Fahrt über Bodenunebenheiten, wenn das Stützrad einfedert. Auch ist erreicht, dass zulässige Achslasten am Schlepper nicht überschritten werden. Auf diese Weise wird einer sichere Transportfahrt auf Straßen und Wegen unterstützt.

Für den Fahrer des Schleppers ist der Bedienerkomfort erhöht. Es ist nicht notwendig, den Oberlenker einer Kopplung der landwirtschaftlichen Maschine zum Schlepper zu lösen, um eine gleichmäßige Achslastverteilung bei halten zu können.

Die landwirtschaftliche Maschine kann Arbeitswerkzeuge eines oder mehreren Arten oder Typen von Arbeitswerkzeugen aufweisen. In einer Ausgestaltung können in Fahrtrichtung und sich hierzu quer erstreckend mehrere Reihen oder Anordnungen von gleichen oder unterschiedlichen Arbeitswerkzeugen hintereinander angeordnet sein. Den Reihen oder Anordnungen ist die Stützradvorrichtung gemeinsam zugeordnet.

Das Stützrad kann beim Einfedern gegenüber der ausgefahrenen Stellung in wenigstens eine weitere eingefederte der verschiedenen Stellungen verlagerbar sein, die von der eingefederten Stellung verschieden ist, wobei die von der Stützradvorrichtung bei der Transportfahrt bereitgestellte Stützkraft in der ausgefahrenen und der weiteren eingefederten Stellung im Wesentlichen gleich ist. Auf diese Weise kann das Stütz- oder Transportrad bei der Transportfahrt in mehrere eingefederte Stellungen einfedern, wobei die von der Stützradvorrichtung für den Rahmen mit den Arbeitswerkzeugen bereitgestellte Stützkraft sowohl in der ausgefahrenen wie auch in den verschiedenen eingefederten Stellungen im Wesentlichen gleich ist.

Die ausgefahrene Stellung kann für das Verlagern des Stützrads in die verschiedenen Stellungen eine Endstellung bilden, in welcher das Stützrad vollständig ausgefahren ist. Bei dieser Ausführungsform ist die von der Stützvorrichtung bei der Transportfahrt bereitgestellte Stützkraft ausgehend von der vollständig ausgefahrenen Stellung des Stützrads beim Einfedern gleichbleibend.

Die eingefahrene Stellung und / oder die weitere eingefahrene Stellung können von einer - der ausgefahrenen Stellung - gegenüberliegenden Endstellung verschieden sein, in welcher das Stützrad vollständig eingefedert ist. Alternativ entspricht die eingefahrene oder die weitere eingefahrene Stellung der gegenüberliegenden vollständig eingefederten Endstellung.

Bei der landwirtschaftlichen Maschine kann vorgesehen sein, dass eine von dem Hydrauliksystem bereitgestellte Kraft in der ausgefahrenen Stellung und der eingefederten Stellung verschieden ist und dass ein Wirkungsgrad einer Umsetzung der mittels des Hydrauliksystems bereitgestellten Kraft in die Stützkraft in der ausgefahrenen und der eingefederten Stellung verschieden ist. Zum Ausbilden der im Wesentlichen gleichen Stützkraft der Stützradvorrichtung bei der Transportfahrt ist hierbei beim Übergang zwischen der ausgefahrenen und der eingefederten Stellung der Wirkungsgrad für die Umsetzung der vom Hydrauliksystem bereitgestellten Kraft in die (resultierende) Stützkraft umgekehrt proportional zur Änderung der von dem Hydrauliksystem bereitgestellten Kraft. Von dem Hydrauliksystem wird eine Kraft bereitgestellt, die dem Einfedern des Stützrads entgegenwirkt. In welchem Umfang oder mit welchem Wirkungsgrad die vom Hydrauliksystem bereitgestellte Kraft in die resultierende (im Wesentlichen gleichbleibende) Stützkraft umgesetzt wird, ist für die ausgefahrene und die eingefederte Stellung verschieden. Somit unterscheiden sich für die ausgefahrene und die eingefederte Stellung sowohl die dann vom Hydrauliksystem bereitstellte Kraft wie auch der Wirkungsgrad der Kraftumsetzung zum Bereitstellen der Stützkraft. Die Änderungen von bereitgestellter Kraft und Wirkungsgrad der Umsetzung verhalten sich umgekehrt proportional. Nimmt also beispielsweise der Wirkungsgrad der Kraftumsetzung beim Übergang aus der ausgefahrenen in die eingefahrene Stellung ab, wird die von dem Hydrauliksystem bereitgestellte Kraft größer, so dass in Summe, also resultierend, die an der Stützradvorrichtung bereitgestellte Stützkraft (resultierende Kraft) im Wesentlichen gleichbleibt.

Beim Übergang zwischen der ausgefahrenen und der eingefederten Stellung kann für den Wirkungsgrad in Bezug zur Änderung der von dem Hydrauliksystem bereitgestellten Kraft eine lineare (umgekehrte) Proportionalität ausgebildet sein. Alternativ kann eine nicht-lineare Proportionalität ausgebildet sein.

Die Trageinrichtung kann einen Tragarm aufweisen, mit dem das Stützrad verbunden ist und der bei der Transportfahrt um eine Schwenkachse in verschiedene Schwenkstellungen in Bezug auf den Rahmen verschwenkbar ist, so dass Stützrad in die verschiedenen Stellungen verlagerbar ist. Die ausgefahrene Stellung sowie die eingefederten Stellungen sind jeweilige Schwenkstellungen des Schwenkarms um die Schwenkachse zugeordnet. Das Stützrad kann über einen Tragarm und eine Tragarmaufnahme mit dem Schwenkarm verbunden sein. Die Gegenläufigkeit für die vom Hydrauliksystem bereitgestellte Kraft und den Wirkungsgrad der Kraftumsetzung beim Übergang zwischen den verschiedenen Stellungen sichert die Aufrechterhaltung eines Drehmomentgleichgewichts für den Tragarm an der Schwenkachse.

Das Hydrauliksystem kann mit dem Tragarm unter Ausbildung eines Hebelarms zwischen einer Verbindungsstelle, in welcher das Hydrauliksystem mit dem Schwenkarm verbunden ist, und der Schwenkachse verbunden sein. Über den Hebelarm, der von der Schwenkachse ausgehend zumindest abschnittsweise in Längsrichtung des Schwenkarms ausgebildet sein kann, wird die von dem Hydrauliksystem bereitgestellte Kraft auf den Schwenkarm eingeleitet.

Das Hydrauliksystem kann einen Hydraulikzylinder aufweisen, welcher an der Verbindungsstelle mit dem Schwenkarm verbunden ist. Bei der Ausführungsform wird die vom Hydrauliksystem bereitgestellte Kraft über den Hydraulikzylinder, welcher seinerseits um eine von der Schwenkachse beabstandete zugeordnete Hydraulikzylinder-Schwenkachse schwenkt, auf den Schwenkarm eingeleitet, zum Beispiel über eine Kolbenstange, die an den Schwenkarm koppeln kann und welche im Betrieb zusammen mit dem im Hydraulikzylinder aufgenommenen Kolben verlagert wird. Hierdurch verändert der Hydraulikzylinder seine Länge.

Der Wirkungsgrad der Umsetzung der mittels des Hydrauliksystems bereitgestellten und auf den Hebelarm der Trageinrichtung eingeleitete Kraft kann aufgrund unterschiedlicher Winkelstellungen zwischen dem Hebelarm und einer Längsrichtung des Hydraulikzylinders verschieden sein. Der Wirkungsgrad für die Umsetzung der über den Hebelarm auf die Trageinrichtung eingeleiteten oder eingekoppelten Kraft hängt von der Winkelstellung zwischen dem Hebelarm und der Längsrichtung des Hydraulikzylinders ab. Allgemein ist der Wirkungsgrad der Kraftumsetzung umso größer, je größer der Winkel zwischen Hebelarm und Längsrichtung des Hydraulikzylinders ist.

Das Hydrauliksystem kann einen Membranspeicher oder / oder einen Kolbenspeicher aufweisen. Der jeweilige Speicher kann in Fluidverbindung mit dem Hydraulikzylinder stehen. Speicher und Hydraulikzylinder können hierbei betriebsabhängig ein offenes oder ein geschlossenes System bilden. Im Fall des geschlossenen System ist kein Rückfluss von Hydraulikfluid in das (übergeordnete) Hydrauliksystem der landwirtschaftlichen Maschine möglich. Geht hierbei die Trageinrichtung in eine eingefederte Stellung über, zum Beispiel aus der ausgefahrenen Stellung, strömt Hydraulikfluid aus dem Hydraulikzylinder zum Beispiel in den Membranspeicher, in welchem hierauf ein Gasvolumen komprimiert wird, was zu einem höheren Gegendruck führt, so dass die vom Hydrauliksystem bereitgestellte Kraft zunimmt, wohingegen wegen der Abnahme des Winkels der Wirkungsgrad für die Umsetzung über den Hebelarm auf die Trageinrichtung abnimmt.

Es kann vorgesehen sein, dass das Stützrad zusätzlich um eine vertikale Schwenkachse schwenkbar gelagert ist. Hierdurch kann das Stützrad mitlenken, insbesondere bei einer Kurvenfahrt.

In einer Ausgestaltung ist die mittels der Stützradvorrichtung bereitgestellte Stützkraft einstellbar. Hierzu kann zum Beispiel das Hydrauliksystem eingerichtet sein, eine einstellbare Basis- oder Mindestgegenkraft bereitzustellen, die sich beim Verlagern zwischen den Stellungen des Stützrads von der Basis- oder Mindestgegenkraft, welche das Hydrauliksystem bereitgestellt, ausgehend umgekehrt proportional zum Wirkungsgrad der Kraftumsetzung ändert.

Die Arbeitswerkzeuge können ein oder mehrere der folgenden Werkzeuge umfassen: Bodenbearbeitungswerkzeug, Spritzwerkzeug, Mähwerkzeug und Säwerkzeug wie Säreihe.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer Anordnung von Arbeitswerkzeugen für eine Sä- oder Drillmaschine;
- Fig. 2: schematische perspektivische Darstellung einer Anordnung für eine Kreiselegge;
- Fig. 3: eine schematische perspektivische Darstellung einer Anordnung für eine Stütz- oder Transportradvorrichtung, wobei das Stütz- oder Transportrad in einer eingefahrenen Stellung angeordnet ist;
- Fig. 4: eine schematische perspektivische Darstellung der Anordnung aus Fig. 3, wobei das Stützrad in einer ausgefahrenen Stellung gezeigt ist;
- Fig. 5: eine schematische perspektivische Darstellung der Anordnung aus Fig. 3, wobei das Stützrad in einer teilweise eingefederten Stellung gezeigt ist; und
- Fig. 6: eine grafische Darstellung für den zeitlichen Verlauf Kraft- und Wegkomponenten an einem Hydraulikzylinder beim Einfedern des Stützrads aus einer ausgefahrenen Stellung.

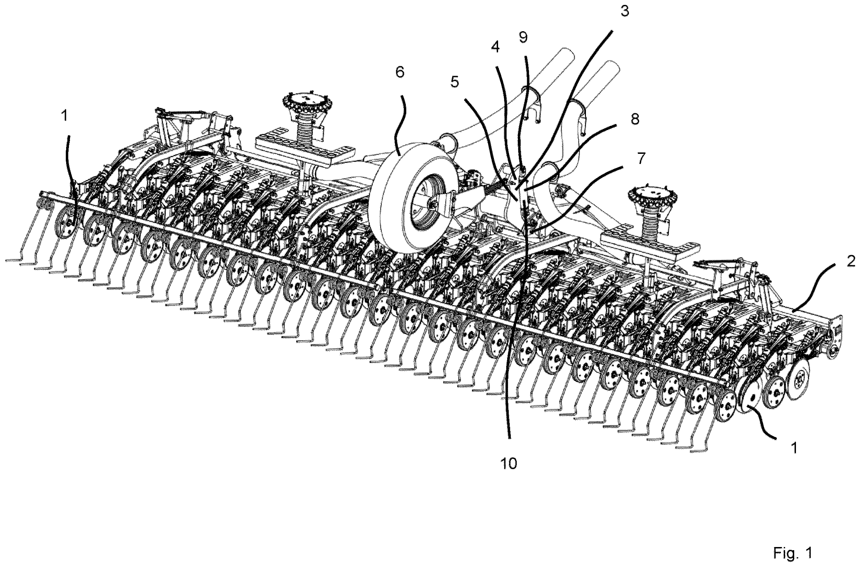

Fig. 1 zeigt eine schematische Darstellung einer Anordnung mit Arbeitswerkzeugen 1 für eine Drill- oder Sämaschine, die zur Feldarbeit und zum Transport an einen Schlepper (nicht dargestellt) gekoppelt wird. Die verschiedenen Arbeitswerkzeuge 1 sind in mehreren Reihen quer zur Fahrtrichtung an einem Rahmen 2 aufgenommen. Derartige Anordnungen von Arbeitswerkzeugen 1 am Rahmen 2 sind als solche in verschiedenen Ausführungen bekannt.

Oberhalb der Arbeitswerkzeuge 1 ist eine Stütz- oder Transportradvorrichtung 3 mit einer Trageinrichtung 4, die im gezeigten Beispiel mit einem Schwenkarm 5 gebildet ist, und einem an der Trageinrichtung 4 angeordneten Stütz- oder Transportrad 6 gebildet ist. Der Schwenkarm 5 ist mit dem Stützrad 6 verbunden und um eine Schwenkachse 7 schwenkbar, die quer zur Fahrtrichtung ausgebildet ist. Zum Verschwenken des Schwenkarms 5 ist ein Hydraulikzylinder 8 vorgesehen, der an einer Verbindungsstelle 9 an den Schwenkarm 5 koppelt, schwenkbar gelagert ist und mit einem Membranspeicher (nicht dargestellt) Teil eines Hydrauliksystems 10 ist, welche der Stützradvorrichtung 3 zugeordnet ist. Mittels der Verbindung zwischen dem Hydraulikzylinder 8 und dem Schwenkarm 5 ist ein Hebelarm 11 ausgebildet, welcher sich von der Schwenkachse 7 ausgehend zur Verbindungsstelle 9 erstreckt.

Bei der Darstellung in Fig. 1 ist das Stützrad 6 in einer Nicht-Arbeitsstellung oberhalb der Arbeitswerkzeuge 1 angeordnet, die ihrerseits in einer Arbeitsstellung für die Feldarbeit angeordnet sind. In dieser Nicht-Arbeitsstellung befindet sich das Stützrad 6 dann beispielsweise bei der Feldarbeit. Im Fall einer Transportfahrt der landwirtschaftlichen Maschine, also deren Transport mit dem Schlepper auf Wegen oder Straßen, werden die Arbeitswerkzeuge 1 mit Hilfe zugeordneter Rahmenelemente des Rahmens 2 angehoben, zum Beispiel seitlich nach oben geschwenkt, so dass unterhalb des Stützrades 6 eine Lücke oder Öffnung entsteht, um das Stützrad 6 mittels Schwenken in eine dem Stützrad 6 zugeordnete Arbeitsstellung (zum Boden hin) zu verlagern, so dass das Stützrad in Bodenkontakt tritt und so den Rahmen 2 mit den hieran aufgenommenen Arbeitswerkzeugen 1 für die Transportfahrt stützt. Ist die landwirtschaftliche Maschine mit der Anordnung aus Fig. 1 mit einer schlepperseitigen Kupplungseinrichtung (nicht dargestellt) in üblicher Weise verbunden, beispielsweise eine Dreipunkt-Kupplung, wird der Rahmen 2 bei der Transportfahrt mit den Arbeitswerkzeugen 1 einerseits von der schlepperseitigen Kupplungseinrichtung und andererseits von der Stützradvorrichtung 3 gestützt, insbesondere ausschließlich hierdurch.

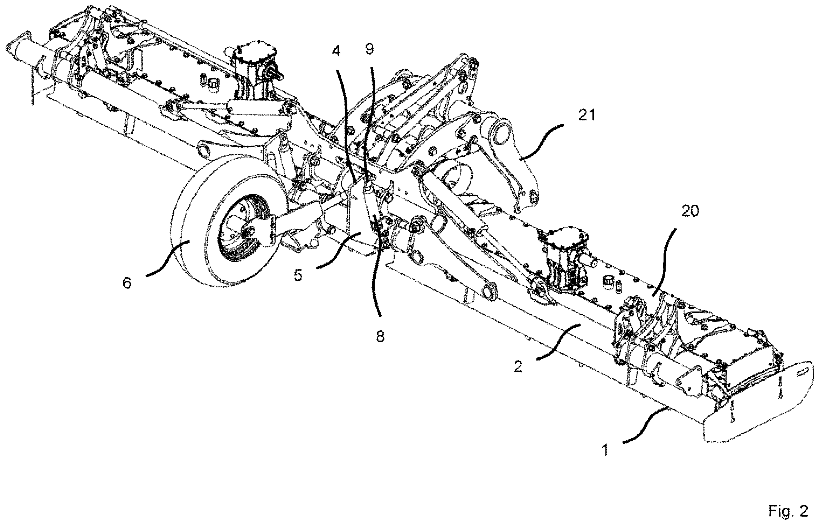

Fig. 2 zeigt eine schematische perspektivische Darstellung einer Anordnung für eine (Solo-)Kreiselegge, bei der Arbeitswerkzeuge 1 an einem Getriebekasten 20 angeordnet sind. Die Kreiselegge ist zum Beispiel mit der Anordnung von Arbeitswerkzeugen 1 kombinierbar, derart, dass eine landwirtschaftliche Maschine mit zugeordnetem Stützrad und mehreren Reihen von Arbeitswerkzeugen geschaffen ist, bei der die Reihen von Arbeitswerkzeugen in Fahrtrichtung hintereinander angeordnet sind.

Über eine maschinenseitige Kupplungseinrichtung 21 kann eine Verbindung zur schlepperseitigen Kupplungseinrichtung (nicht dargestellt) hergestellt werden. Die Stützradvorrichtung 3 ist in Fig. 2 ebenso in einer eingefahrenen Nicht-Arbeitsstellung gezeigt. Gegenüberliegende Abschnitte der Wanne 20 mit den Arbeitswerkzeugen 1 können für eine Transportfahrt auf der Straße seitlich nach oben geschwenkt werden, wie dies als solches bekannt ist. Die Stützradvorrichtung 3 kann dann mittels des Hydraulikzylinders 8 des Hydrauliksystems 10 in eine ausgefahrene Stellung zum Boden hin verlagert werden, um die Stützung des Rahmens 2 mit den Arbeitswerkzeugen 1 zu übernehmen.

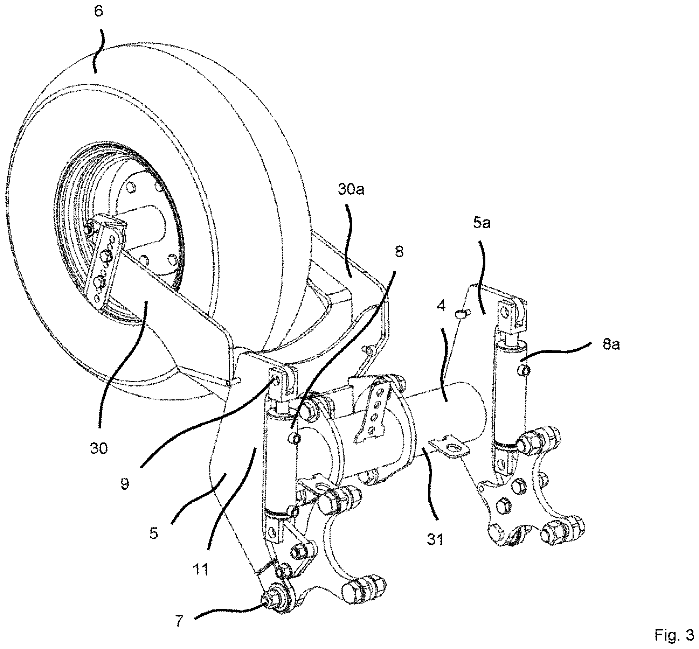

Die Fig. 3 bis 5 zeigen schematische perspektivisches Darstellungen für eine Anordnung für die Stützradvorrichtung 3. Für gleiche Merkmale werden in den Fig. 3 bis 5 dieselben Bezugszeichen wie in den Fig. 1 und 2 verwendet.

Fig. 3 zeigt eine (vollständig) eingefahrene Stellung für den Schwenkarm 5 und das hiermit über einen Tragarm 30 und einer Tragarmaufnahme 31 verbundene Stützrad 6. Mittels Schwenken des Schwenkarms 5 wird so das Stützrad 6 in verschiedene Stellungen in Bezug auf den Rahmen 2 der landwirtschaftlichen Maschine verlagert. Die Trageinrichtung 4 der Stütz- oder Transportradvorrichtung 3 ist beim gezeigten Beispiel mit einem weiteren Schwenkarm 5a, einem weiteren Hydraulikzylinder 8a sowie einem weiteren Tragarm 30a doppelseitig ausgeführt.

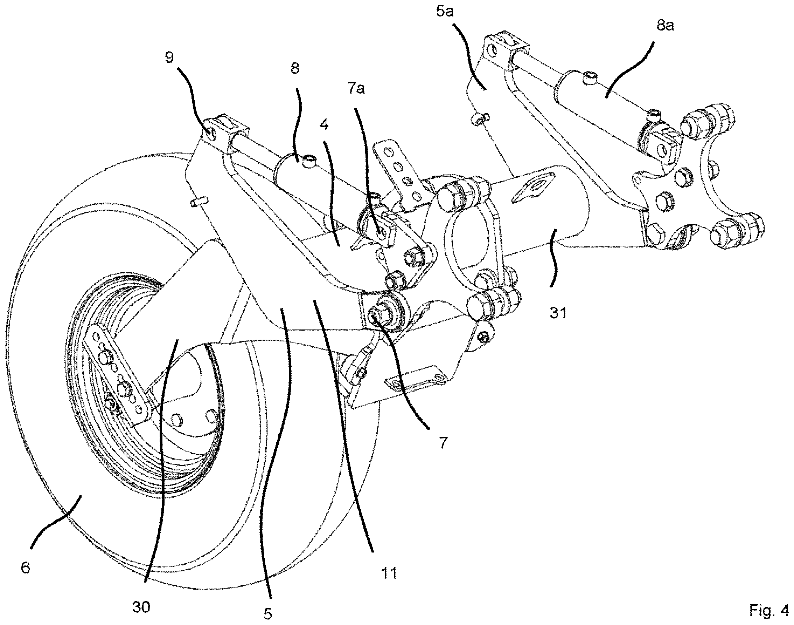

Eine Längsrichtung des Hydraulikzylinders 8 verläuft bei der in Fig. 3 gezeigten Stellung im Wesentlichen parallel zu einer Verbindungslinie zwischen der Schwenkachse 7 und der Verbindungsstelle 9. Um den Schwenkarm 5 und somit das Stützrad 6 in eine ausgefahrenen Stellung (vgl. Fig. 4) und somit in die Arbeitsstellung für die Transportfahrt zu verlagern, wird der Hydraulikzylinder 8 verlängert, so dass der Schwenkarm 5 um die Schwenkachse 7 geschwenkt wird, wodurch die Längsrichtung des Hydraulikzylinders 8 sowie die gedachte Verbindungslinie zwischen der Schwenkachse 7 und der Verbindungsstelle 9 einen Öffnungswinkel einnehmen.

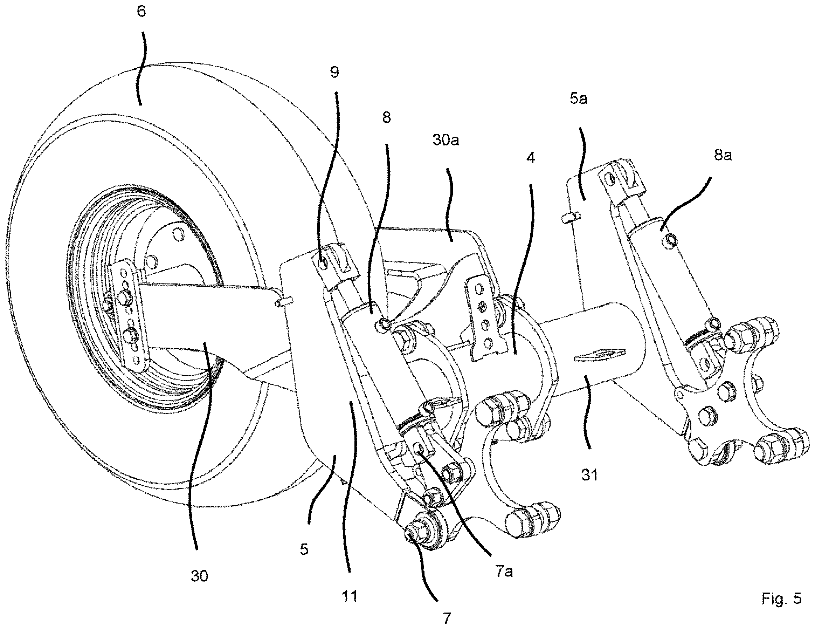

Aus der in der Fig. 4 gezeigten ausgefahrenen Stellung kann der Schwenkarm 5 und somit das Stützrad 6 am Tragarm 30 in eine demgegenüber (teilweise) eingefederte Stellung verlagert werden, die in Fig. 5 gezeigt ist, beispielsweise dann, wenn bei der Transportfahrt eine Bodenwelle überfahren wird. Aufgrund des Einfederns verkürzt sich der Hydraulikzylinder 8. Hierdurch strömt aus dem Hydraulikzylinder 8 Hydraulikfluid in einen zugeordneten Membranspeicher (nicht dargestellt), der mit dem Hydraulikzylinder 8 in Fluidverbindung steht und mit diesem zumindest in dieser Betriebsart ein geschlossenes System bildet, derart, dass aus dem geschlossenen System kein Hydraulikfluid in das Hydrauliksystem der landwirtschaftlichen Maschine rückfließen kann. Aufgrund des Strömens von Hydraulikfluid aus dem Hydraulikzylinder 8 in dem Membranspeicher wird dort ein auf der Gegenseite der Membran des Membranspeichers angeordnetes Gas komprimiert, was wiederum einen erhöhten Gegendruck bewirkt. Auf diese Weise wird die von dem Hydrauliksystem 10 mit dem Hydraulikzylinder 8 und dem Membranspeicher bereitgestellte Kraft erhöht.

Der Hydraulikzylinder 10 schwenkt bei der Verlagerung seinerseits um eine von der Schwenkachse 7 beabstandete zugeordnete Hydraulikzylinder-Schwenkachse 7a.

Umgekehrt verhält es sich beim Übergang aus der ausgefahrenen Stellung in Fig. 4 in die eingefederte Stellung in Fig. 5 bezüglich des Wirkungsgrads der Umsetzung der mittels des Hydrauliksystems bereitgestellten und über den Hydraulikzylinder auf den Schwenkarm 5 eingeleiteten Kraft, weil sich hierbei der Winkel zwischen der Längsrichtung des Hydraulikzylinders 8 und der gedachten Verbindungslinie zwischen der Verbindungsstelle 9 und der Schwenkachse 7 verringert, wodurch die am Schwenkarm 5 wirkende Kraft gemindert wird. Die von dem Hydrauliksystem 10 bereitgestellte Kraft einerseits und der Wirkungsgrad der Krafteinleitung andererseits verhalten sich somit umgekehrt proportional. Auf diese Weise bleibt die mittels der Stützradvorrichtung 3 bei der Transportfahrt bereitgestellte Stützkraft im Wesentlichen gleich, was zur Folge hat, dass die Kraftbelastung der schlepperseitigen Kupplungseinrichtung durch die landwirtschaftliche Maschine im Wesentlichen gleich bleibt. Hierdurch ist der Einfluss der landwirtschaftlichen Maschine bei der Transportfahrt auf die Achslast des Schleppers im Wesentlichen gleichbleibend, was die Fahrsicherheit für die Maschinenkombination von Schlepper und landwirtschaftlicher Maschine verbessert.

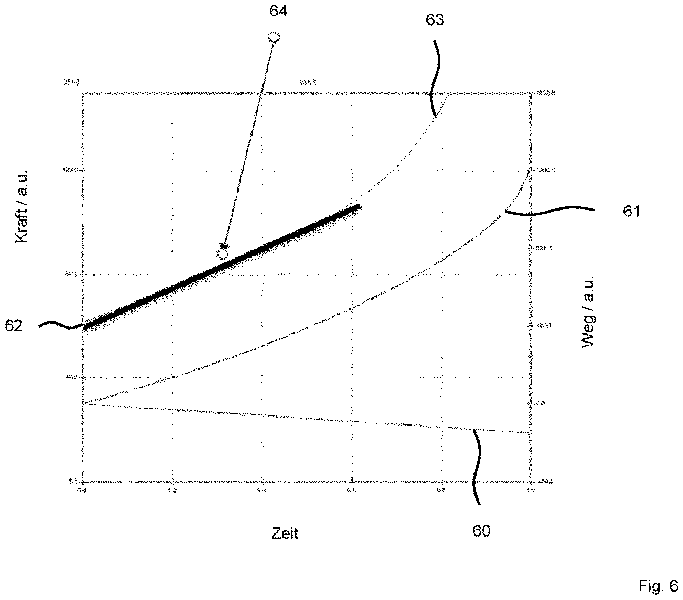

Fig. 6 zeigt dies anhand einer grafischen Darstellung ergänzend. Für das Verschwenken des Schwenkarms 5 sind Kraft- und Wegkomponenten dargestellt. Eine Kurve 60 zeigt den zeitabhängigen Zylinderhub am Hydraulikzylinder 8 beim Schwenken. Eine Kurve 61 zeigt hierzu den Verstellweg des Stützrades 6 beim Einfedern aus der (vollständig) ausgefahrenen Stellung 62 hin zu eingefederten Stellungen mit zunehmender Zeit. Schließlich zeigt Kurve 63 die Kraft am Hydraulikzylinder 8 aufgrund des Zusammenwirkens mit dem Membranspeicher im geschlossenen System beim Schwenken. Es ergibt sich, dass der Kurvenverlauf für die Kurve 63 ausgehend von der ausgefahrenen Stellung 62 beim Einfedern zunächst einen linearen Bereich 64 durchläuft.

## Patentansprüche

1. Landwirtschaftliche Maschine zum Anhängen an einen Schlepper, mit
- einem Rahmen (2);
- Arbeitswerkzeugen (1), die an dem Rahmen (2) angeordnet sind und zwischen einer Arbeitsstellung und einer Transportstellung verlagerbar sind;
- einer Kupplungsvorrichtung, die eingerichtet ist, zum Anhängen an einen Schlepper an eine schlepperseitige Kupplungsvorrichtung zu koppeln; und
- einer Stützradvorrichtung (3), die eingerichtet ist, den Rahmen (2) mit den Arbeitswerkzeugen (1) bei einer Transportfahrt zu stützen, wenn die Arbeitswerkzeuge (1) in der Transportstellung angeordnet sind, und die Folgendes aufweist:
- ein Stützrad (6), welches bei der Transportfahrt auf dem Boden abrollt,
- einer Trageinrichtung (4), mit der das Stützrad (6) am Rahmen (2) angeordnet und für die Transportfahrt in verschiedene Stellungen in Bezug auf den Rahmen (2) verlagerbar ist, und
- ein Hydrauliksystem (10), welches mit der Trageinrichtung (4) verbunden und eingerichtet ist, bei der Transportfahrt ein Einfedern des Stützrads (6) mittels Verlagern aus einer ausgefahrenen in eine demgegenüber eingefederte der verschiedenen Stellungen gegen eine vom Hydrauliksystem (10) bereitgestellte Gegenkraft zuzulassen;
**dadurch gekennzeichnet, dass** eine von der Stützradvorrichtung (3) bei der Transportfahrt bereitgestellte Stützkraft in der ausgefahrenen und der eingefederten Stellung im Wesentlichen gleich ist.

2. Landwirtschaftliche Maschine nach Anspruch 1, **dadurch gekennzeichnet, dass** das Stützrad (6) beim Einfedern gegenüber der ausgefahrenen Stellung in wenigsten eine weitere eingefederte der verschiedenen Stellungen verlagerbar ist, die von der eingefederten Stellung verschieden ist, wobei die von der Stützradvorrichtung (3) bei der Transportfahrt bereitgestellte Stützkraft in der ausgefahrenen und der weiteren eingefederten Stellung im Wesentlichen gleich ist.

3. Landwirtschaftliche Maschine nach Anspruch 1 oder 2, **dadurch gekennzeichnet, dass** die ausgefahrene Stellung für das Verlagern des Stützrads (6) in die verschiedenen Stellungen eine Endstellung bildet, in welcher das Stützrad vollständig ausgefahren ist.

4. Landwirtschaftliche Maschine nach mindestens einem der vorangehenden Ansprüche, **dadurch gekennzeichnet, dass** die eingefahrene Stellung und / oder die weitere eingefahrene Stellung von einer gegenüberliegenden Endstellung verschieden sind, in welcher das Stützrad (6) vollständig eingefedert ist.

5. Landwirtschaftliche Maschine nach mindestens einem der vorangehenden Ansprüche, **dadurch gekennzeichnet, dass**
- eine von dem Hydrauliksystem (10) bereitgestellte Gegenkraft in der ausgefahrenen Stellung und der eingefederten Stellung verschieden ist und
- ein Wirkungsgrad einer Umsetzung der mittels des Hydrauliksystems (10) bereitgestellten Gegenkraft in die Stützkraft in der ausgefahrenen und der eingefederten Stellung verschieden ist;
wobei zum Ausbilden der im Wesentlichen gleichen Stützkraft der Stützradvorrichtung (3) bei der Transportfahrt beim Übergang zwischen der ausgefahrenen und der eingefederten Stellung der Wirkungsgrad umgekehrt proportional zur Änderung der von dem Hydrauliksystem (10) bereitgestellten Gegenkraft ist.

6. Landwirtschaftliche Maschine nach Anspruch 5, **dadurch gekennzeichnet, dass** beim Übergang zwischen der ausgefahrenen und der eingefederten Stellung für den Wirkungsgrad in Bezug zur Änderung der von dem Hydrauliksystem (10) bereitgestellten Gegenkraft eine lineare umgekehrte Proportionalität ausgebildet ist.

7. Landwirtschaftliche Maschine nach mindestens einem der vorangehenden Ansprüche, **dadurch gekennzeichnet, dass** die Trageinrichtung (3) einen Schenkarm (5) aufweist, mit dem das Stützrad (6) verbunden und der bei der Transportfahrt um eine Schwenkachse (7) in verschiedene Schwenkstellungen in Bezug auf den Rahmen (2) verschwenkbar ist, so dass Stützrad (6) in die verschiedenen Stellungen verlagerbar ist.

8. Landwirtschaftliche Maschine nach Anspruch 7, **dadurch gekennzeichnet, dass** das Hydrauliksystem (10) mit dem Schwenkarm (5) unter Ausbildung eines Hebelarms (11) zwischen einer Verbindungsstelle (9), in welcher das Hydrauliksystem (10) mit dem Schwenkarm (5) verbunden ist, und der Schwenkachse (7) verbunden ist.

9. Landwirtschaftliche Maschine nach Anspruch 8, **dadurch gekennzeichnet, dass** das Hydrauliksystem (10) einen Hydraulikzylinder (8) aufweist, welcher an der Verbindungsstelle (9) mit dem Schwenkarm (5) verbunden ist.

10. Landwirtschaftliche Maschine nach den Ansprüchen 5 und 9, dadurch **gekenn-zeichnet**, dass der Wirkungsgrad der Umsetzung der mittels des Hydrauliksystems (10) bereitgestellten und auf den Hebelarm (11) der Trageinrichtung (3) eingeleiteten Gegenkraft aufgrund unterschiedlicher Winkelstellungen zwischen dem Hebelarm (11) und einer Längsrichtung des Hydraulikzylinders (8) verschieden ist, wobei
- der Wirkungsgrad umso größer ist, je größer der Winkel zwischen Hebelarm (11) und der Längsrichtung des Hydraulikzylinders (8) ist, und/oder
- bei einer Abnahme des Winkels der Wirkungsgrad für die Umsetzung über den Hebelarm (11) auf die Trageinrichtung (4) abnimmt.

11. Landwirtschaftliche Maschine nach mindestens einem der vorangehenden Ansprüche, **dadurch gekennzeichnet, dass** das Hydrauliksystem (10) einen Membranspeicher oder / oder einen Kolbenspeicher aufweist.

12. Landwirtschaftliche Maschine nach mindestens einem der vorangehenden Ansprüche, **dadurch gekennzeichnet, dass** die Arbeitswerkzeuge (1) ein oder mehrere der folgenden Werkzeuge umfassen: Bodenbearbeitungswerkzeug, Spritzwerkzeug, Mähwerkzeug und Säwerkzeug.

13. Landwirtschaftliche Maschinenkombination, mit einem Schlepper und einer landwirtschaftliche Maschine nach mindestens einem der vorangehenden Ansprüche, die mit dem Schlepper verbunden ist.

## Claims

1. Agricultural machine to be hitched to a tractor, comprising
- a frame (2);
- work tools (1), which are arranged on the frame (2) and can be moved between a working position and a transport position;
- a coupling device, which, for hitching to a tractor, is configured to be coupled to a tractor-side coupling device; and
- a support wheel device (3), which is configured to support the frame (2) with the work tools (1) during a transport journey, when the work tools (1) are arranged in the transport position, and comprises the following:
- a support wheel (6), which rolls on the ground during the transport journey,
- a carrier means (4), by means of which the support wheel (6) is arranged on the frame (2) and which can be moved into various positions with respect to the frame (2) for the transport journey, and
- a hydraulic system (10), which is connected to the carrier means (4) and is configured to allow deflection of the support wheel (6) during the transport journey by moving the support wheel out of an extended position into a contrastingly deflected position of the various positions counter to a counterforce provided by the hydraulic system (10);
**characterized in that** a supporting force provided by the support wheel device (3) during the transport journey is substantially the same in the extended and in the deflected position.

2. Agricultural machine according to Claim 1, **characterized in that** the support wheel (6) can be moved into at least one further deflected position of the various positions, which is different from the deflected position, when it is deflected relative to the extended position, wherein the supporting force provided by the support wheel device (3) during the transport journey is substantially the same in the extended position and in the further deflected position.

3. Agricultural machine according to Claim 1 or 2, **characterized in that** the extended position forms an end position for moving the support wheel (6) into the various positions, in which end position the support wheel is fully extended.

4. Agricultural machine according to at least one of the preceding claims, **characterized in that** the retracted position and / or the further retracted position are different from an opposite end position in which the support wheel (6) is fully deflected.

5. Agricultural machine according to at least one of the preceding claims, **characterized in that**
- a counterforce provided by the hydraulic system (10) is different in the extended position and in the deflected position and
- a degree of efficiency of a conversion of the counterforce provided by means of the hydraulic system (10) into the supporting force is different in the extended and in the deflected position;
Wherein, in order to provide substantially the same supporting force of the support wheel device (3) during the transport journey, during the transition between the extended and the deflected position, the degree of efficiency is inversely proportional to the change in the counterforce provided by the hydraulic system (10).

6. Agricultural machine according to Claim 5, **characterized in that**, during the transition between the extended and the deflected position, a linear inverse proportionality is formed for the degree of efficiency in relation to the change in the counterforce provided by the hydraulic system (10).

7. Agricultural machine according to at least one of the preceding claims, **characterized in that** the carrier means (3) has a pivot arm (5), to which the support wheel (6) is connected and which can be pivoted about a pivot axis (7) into various pivot positions in relation to the frame (2) during the transport journey such that the support wheel (6) can be moved into the various positions.

8. Agricultural machine according to Claim 7, **characterized in that** the hydraulic system (10) is connected to the pivot arm (5), forming a lever arm (11) between a connection point (9), in which the hydraulic system (10) is connected to the pivot arm (5), and the pivot axis (7).

9. Agricultural machine according to Claim 8, **characterized in that** the hydraulic system (10) has a hydraulic cylinder (8), which is connected to the pivot arm (5) at the connection point (9).

10. Agricultural machine according to Claims 5 and 9, **characterized in that** the degree of efficiency of the conversion of the counterforce provided by means of the hydraulic system (10) and applied to the lever arm (11) of the carrier means (3) is different due to different angular positions between the lever arm (11) and a longitudinal direction of the hydraulic cylinder (8), wherein
- the greater the angle between the lever arm (11) and the longitudinal direction of the hydraulic cylinder (8), the greater the degree of efficiency, and/or
- as the angle decreases, the degree of efficiency of the conversion via the lever arm (11) to the carrier means (4) decreases.

11. Agricultural machine according to at least one of the preceding claims, **characterized in that** the hydraulic system (10) has a diaphragm accumulator and / or a piston accumulator.

12. Agricultural machine according to at least one of the preceding claims, **characterized in that** the work tools (1) comprise one or more of the following tools: tillage tool, spraying tool, mowing tool and sowing tool.

13. Agricultural machine combination, comprising a tractor and an agricultural machine according to at least one of the preceding claims that is connected to the tractor.

## Revendications

1. Machine agricole, destinée à être attelée à un tracteur, pourvue
- d'un châssis (2);
- d'outils de travail (1), qui sont placés sur le châssis (2) et qui sont déplaçables entre une position de travail et une position de transport,
- d'un dispositif d'attelage, qui est configuré pour l'attelage sur un tracteur, pour s'accoupler sur un dispositif d'attelage se trouvant sur le tracteur ; et
- d'un dispositif de roue d'appui (3), qui est conçu pour supporter le châssis (2) avec les outils de travail (1) lors d'un déplacement de transport, lorsque les outils de travail (1) sont placés dans la position de transport et qui comporte ce qui suit :
- une roue d'appui (6), laquelle roule sur le sol lors du déplacement de transport,
- un système de support (4), à l'aide duquel la roue d'appui (6) est placée sur le châssis (2) et qui pour le déplacement de transport est déplaçable dans différentes positions en rapport au châssis (2) et
- un système hydraulique (10), lequel est assemblé avec le système de support (4) et configuré pour admettre pendant le déplacement de transport un rabattement de la roue d'appui (6) par déplacement d'une position déployée dans des différentes positions rabattue par rapport à celle-ci à l'encontre d'une force antagoniste mise à disposition par le système hydraulique (10) ;
**caractérisée en ce qu'**une force d'appui mise à disposition par le dispositif de roue d'appui (3) lors du déplacement de transport est sensiblement identique en position déployée et rabattue.

2. Machine agricole selon la revendication 1, **caractérisée en ce que** lors d'un rabattement par rapport à la position déployée, la roue d'appui (6) est déplaçable dans au moins une autre position rabattue parmi les différentes positions, qui est différente de la position rabattue, la force d'appui mise à disposition par le dispositif de roue d'appui (3) lors du déplacement de transport étant sensiblement identique dans la position déployée et dans l'autre position rabattue.

3. Machine agricole selon la revendication 1 ou 2, **caractérisée en ce que** la position déployée pour le déplacement de la roue d'appui (6) dans les différentes positions constitue une position extrême dans laquelle la roue d'appui est totalement déployée.

4. Machine agricole selon au moins l'une quelconque des revendications précédentes, **caractérisée en ce que** la position rentrée et / ou l'autre position rentrée est différentes d'une position extrême opposée, dans laquelle la roue d'appui (6) est totalement rabattue.

5. Machine agricole selon au moins l'une quelconque des revendications précédentes, **caractérisée en ce**
- **qu'**une force antagoniste mise à disposition par le système hydraulique (10) est différente dans la position déployée et dans la position rabattue et
- **qu'**un niveau de rendement d'une transposition de la force antagoniste mise à disposition au moyen du système hydraulique (10) dans la force d'appui est différent dans la position déployée et dans la position rabattue ;
pour créer la force d'appui sensiblement identique du dispositif de roue d'appui (3) lors du déplacement de transport, lors du passage entre la position déployée et la position rabattue, le niveau de rendement étant inversement proportionnel à la modification de la force antagoniste mise à disposition par le système hydraulique (10).

6. Machine agricole selon la revendication 5, **caractérisée en ce que** lors du passage entre la position déployée et la position rabattue, pour le niveau de rendement en rapport à la modification de la force antagoniste mise à disposition par le système hydraulique (10), une proportionnalité linéaire inverse est constituée.

7. Machine agricole selon au moins l'une quelconque des revendications précédentes, **caractérisée en ce que** le système de support (3) comporte un bras pivotant (5), avec lequel la roue d'appui (6) est assemblée et qui lors du déplacement de transport est susceptible de pivoter autour d'un axe de pivotement (7) dans différentes positions pivotées en rapport au châssis (2), de sorte que la roue d'appui (6) soit déplaçable dans les différentes positions.

8. Machine agricole selon la revendication 7, **caractérisée en ce que** le système hydraulique (10) est assemblé avec le bras pivotant (5) en constituant un bras de levier (11) entre un point d'assemblage (9), dans lequel le système hydraulique (10) est assemblé avec le bras pivotant (5) et l'axe de pivotement (7).

9. Machine agricole selon la revendication 8, **caractérisée en ce que** le système hydraulique (10) comporte un vérin hydraulique (8) lequel au point d'assemblage (9) est assemblé avec le bras pivotant (5).

10. Machine agricole selon les revendications 5 et 9, **caractérisé en ce que**, du fait de différentes positions angulaires entre le bras de levier (11) et une direction longitudinale du vérin hydraulique (8), le niveau de rendement de la transposition de la force antagoniste mise à disposition au moyen du système hydraulique (10) et introduite sur le bras de levier (11) du système de support (3) est différent
- le niveau de rendement étant d'autant plus élevé que l'angle entre le bras de levier (11) et la direction longitudinale du vérin hydraulique (8) est important et / ou
- lors d'une diminution de l'angle, le niveau de rendement pour la transposition par l'intermédiaire du bras de levier (11) sur le système de support (4) diminuant.

11. Machine agricole selon au moins l'une quelconque des revendications précédentes, **caractérisée en ce que** le système hydraulique (10) comporte un accumulateur à membrane et / ou un accumulateur à piston.

12. Machine agricole selon au moins l'une quelconque des revendications précédentes, **caractérisée en ce que** les outils de travail (1) comprennent un ou plusieurs des outils suivants : outil de travail du sol, outil de vaporisation, outil de tonte et outil à semer.

13. Association d'un machine agricole avec un tracteur et une machine agricole selon au moins l'une quelconque des revendications précédentes, qui est couplée avec le tracteur.
